# EUROPEAN PATENT APPLICATION

(11) **EP 1 758 386 A1**
(43) Date of publication of application: **28.02.2007**
(21) Application number: 05018523.0
(22) Date of filing: 25.08.2005
(51) Int. Cl.: H04N 5/60

(54) **Audio reproducing apparatus**

(71) Applicant: Coretronic Corporation, Chu-Nan 350, Miao-Li County (TW)
(72) Inventor: Huang, Hsi-Man, Chu-Nan 350 Miao-Li County (CN)
(74) Representative: TER MEER - STEINMEISTER & PARTNER GbR

(57) **Abstract**

The present invention is an audio reproducing apparatus in a video and audio system, comprising a digital signal generator, a de-multiplexer, a Dolby decoder, a pulse width modulator, and an audio player. The digital signal generator generates a first digital signal. The de-multiplexer connected to the digital signal generator receives the first digital signal to generate a selection signal. The Dolby decoder connected to the de-multiplexer is used for receiving the selection signal, for transforming the selection signal into a first processing signal, and for further transforming the first processing signal into a second processing signal after a transformation operation. The pulse width modulator connected to the Dolby decoder receives the second processing signal and generates a modulated signal. The audio player connected to the pulse width modulator receives the modulated signal and transforms the modulated signal into an audio signal.

## Description

### BACKGROUND OF THE INVENTION

### 1. Field of the invention

The present invention relates to an audio reproducing apparatus, especially to an audio reproducing apparatus of a rear projection television.

### 2. Description of the prior art

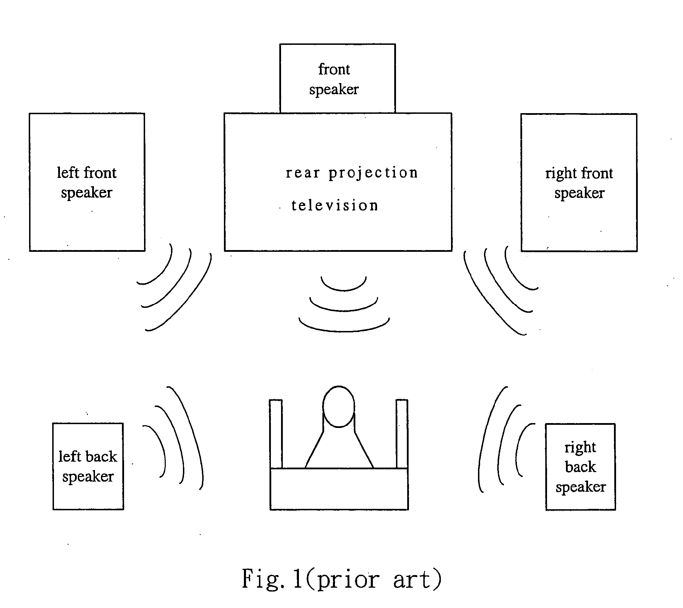

In the prior art as shown in Fig.1, if the audio reproducing apparatus wants to produce the effect of surround sound, at least five speakers must be used to output sound; the five speakers are located in positions at the direct front, the right front, the left front, the right back, and the left back of the user, and the effect of surround sound is achieved by the audio output of the five speakers. However, using five speakers occupies larger space and raises the cost.

The rear projection television at present adopts two speakers to output audio sounds, so the audio quality cannot reach the same effect of surround sound as the five speakers. The present invention utilizes the Dolby Virtual Speaker Technology, which is announced by the America Dolby Laboratories, to process the Dolby Digital encoding audio signal by the digital signal processor of Dolby Virtual Speaker Decoder, as shown in the invention contents of U.S. patent number 5,502,747. In this way, the effect of the surround sound of Dolby Digital can be simulated by two speakers of the rear projection television.

Therefore, the main objective of the present invention is to provide an audio reproducing apparatus in a rear projection television to overcome the above problem.

### SUMMARY OF THE INVENTION

An objective of the present invention is to provide an audio reproducing apparatus in a video and audio system which simulates the effect of a five-channel surround sound by using two speakers.

The other objective of the present invention is to provide a rear projection television which utilizes two speakers to simulate the effect of a five-channel surround sound.

The invention provides an audio reproducing apparatus in a video and audio system; the audio reproducing apparatus comprises a digital signal generator, a de-multiplexer, a Dolby decoder, a pulse width modulator, and an audio player.

The digital signal generator is used for generating a first digital signal. The de-multiplexer, which is connected to the digital signal generator, is used for receiving the first digital signal to generate a selection signal. The Dolby decoder connected to the de-multiplexer is used for receiving the selection signal, for transforming the selection signal to a first processing signal, and for further transforming the first processing signal to a second processing signal after a transformation operation. The pulse width modulator connected to the Dolby decoder is used for receiving the second processing signal and for generating a modulated signal. The audio player connected to the pulse width modulator is used for receiving the modulated signal and for transforming the modulated signal to an audio signal.

The audio reproducing apparatus of the present invention transforms the digital signal into the processing signal after a transformation operation by utilizing the Dolby decoder, and it generates the audio signal to simulate the effect of five-channel surround sound by using two peakers. The invention not only raises the entertainment effect of the digital appliances by the surround sound of Dolby Digital, which is simulated by two speakers of television, but also saves the space and cost needed.

The advantage and spirit of the invention may be understood by the following recitations together with the appended drawings.

### BRIEF DESCRIPTION OF THE APPENDED DRAWINGS

Fig. 1 is a schematic diagram of the surround sound effect of the prior art.
Fig. 2 is a block diagram of the system of the audio reproducing apparatus of the present invention.
Fig. 3 is a schematic diagram of one embodiment of the audio player of the audio reproducing apparatus of the invention.
Fig. 4 is a schematic diagram of another embodiment of the digital signal generator of the invention.
Fig. 5 is a schematic diagram of still another embodiment of the digital signal generator of the invention.
Fig. 6 is a schematic diagram of still another embodiment of the digital signal generator of the invention.
Fig. 7 is a schematic diagram of still another embodiment of the digital signal generator of the invention.

### DETAILED DESCRIPTION OF THE INVENTION

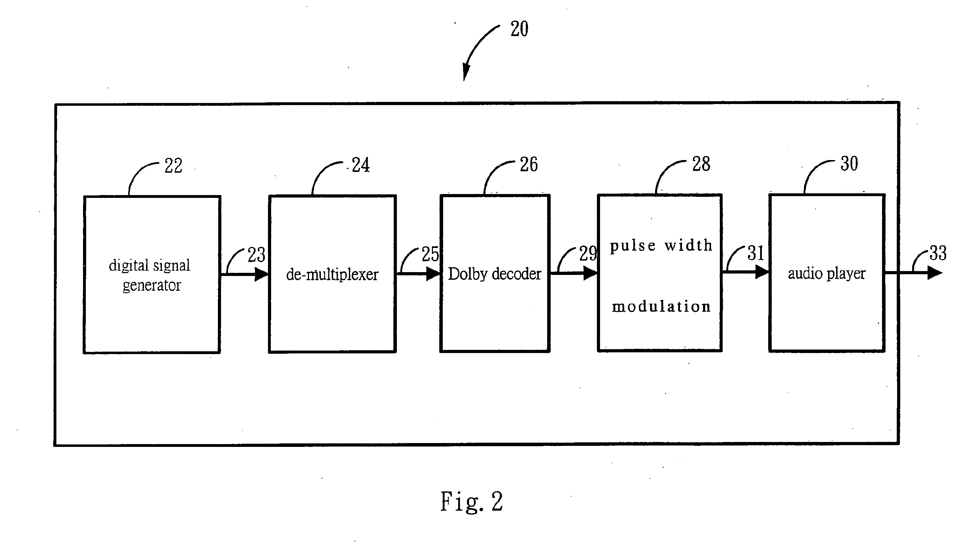

Please refer to Fig. 2. The audio reproducing apparatus 20 comprises a digital signal generator 22, a de-multiplexer 24, a Dolby decoder 26, a pulse width modulator 28, and an audio player 30.

The digital signal generator 22 is used for generating a first digital signal 23. The de-multiplexer 24, which is connected to the digital signal generator 22, is used for receiving the first digital signal 23 to generate a selection signal 25. The Dolby decoder 26 connected to the de-multiplexer 24 is used for receiving the selection signal 25, for transforming the selection signal 25 to a first processing signal (not shown in Fig. 2), and for further transforming the first processing signal to a second processing signal 29 after a transformation operation. In an embodiment, the first processing signal (not shown in Fig. 2) of the Dolby decoder 26 comprises six channel output signals, wherein the six channel output signals are outputted by a general Dolby Digital speaker. In an embodiment, the second processing signal 29 of the Dolby decoder 26 comprises a channel simulation signal 29, wherein the second processing signal 29 transforms the first processing signal to the channel simulation signal after a transformation operation.

The pulse width modulator 28 connected to the Dolby decoder 26 is used for receiving the second processing signal 29 and for generating a modulated signal 31. The audio player 30 connected to the pulse width modulator 28 is used for receiving the modulated signal 31 and for transforming the modulated signal 31 to an audio signal 33.

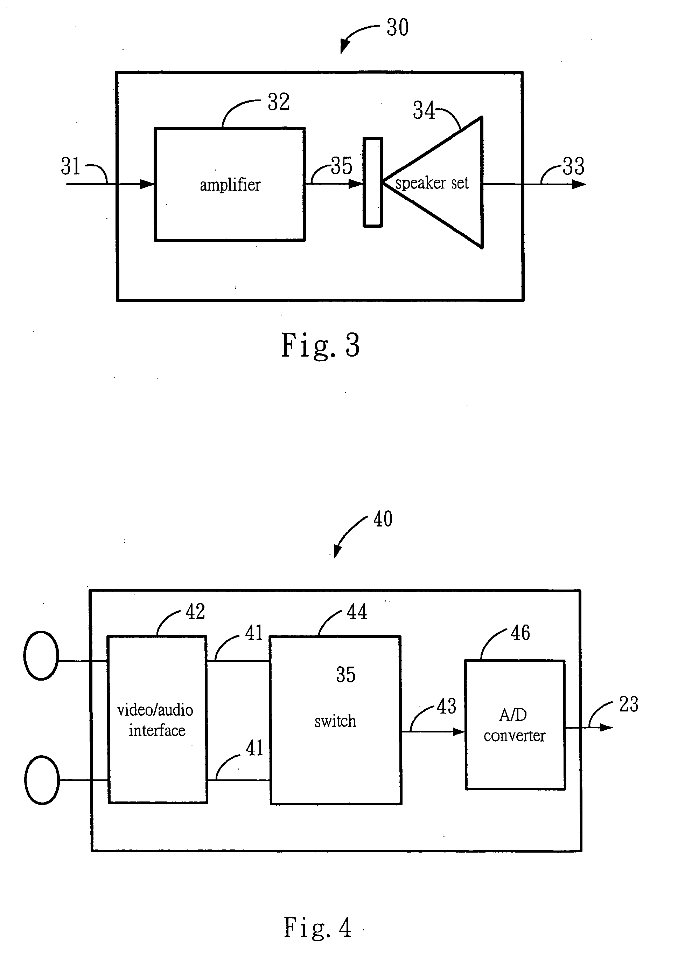

As shown in Fig. 3, the audio player 30 comprises an amplifier 32 and a speaker set 34. The amplifier 32 is used for transforming the modulated signal 31 into an amplified signal 35. The speaker set 34 connected to the amplifier 32 is used for receiving and transforming the amplified signal 35 into the audio signal 33. In an embodiment, the speaker set 34 comprises two speakers; the amplifier 32 transforms the amplified signal 35 into the audio signal 33, and then outputs the audio signal 33 by two speakers to simulate the effect of five-channel surround sound by using two speakers. In an embodiment, the audio reproducing apparatus 20 is a rear projection television.

The digital signal generator can generate the first digital signal by utilizing the below different embodiments. As shown in Fig. 4, in this embodiment, the digital signal generator 40 comprises a video/audio interface 42, a switch 44, and an A/D converter 46. The video/audio interface 42 is used for receiving a video/audio signal 41. The switch 44 connected to the video/audio interface 42 is used for transforming the video/audio signal 41 into a transformed signal 43. The A/D converter 46 connected to the switch 44 is used for transforming the transformed signal 43 into the first digital signal 23.

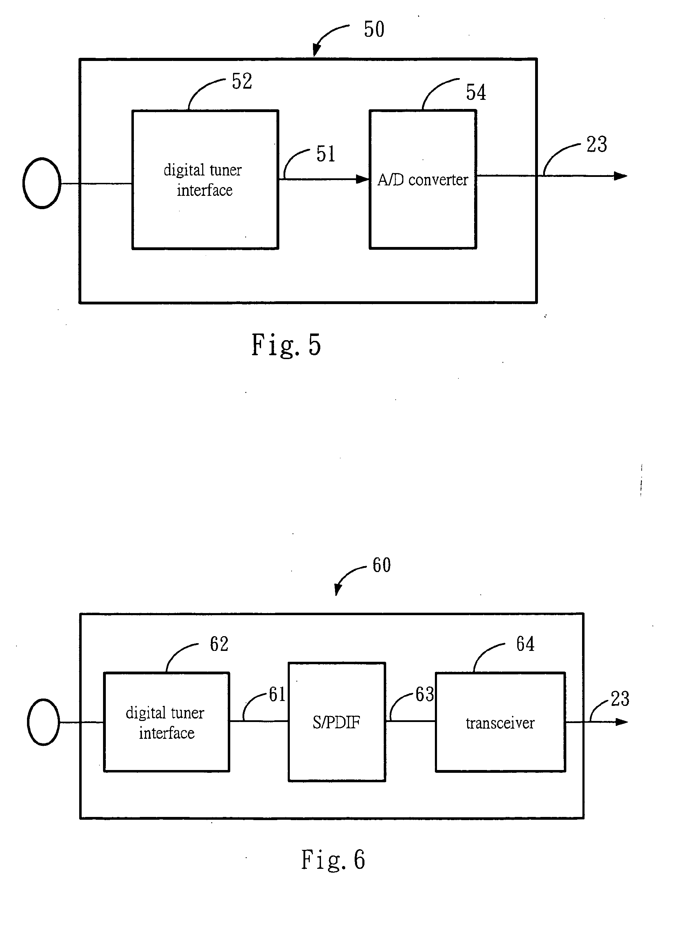

As shown in Fig. 5, in the embodiment, the digital signal generator 50 comprises a digital tuner interface 52 and an A/D converter 54. The digital tuner interface is used for receiving a video/ audio signal 51. The A/D converter 54 connected to the digital tuner interface 52 is used for transforming the video/ audio signal 51 into the first digital signal 23. In the embodiment, the video/audio signal 51 is an analog signal.

As shown in Fig. 6, in the embodiment, the digital signal generator 60 comprises a digital tuner interface 62, a Sony/Philips digital interface (S/PDIF) 64, and a transceiver 66.

The digital tuner interface 62 is used for receiving a video/audio signal 61. The Sony/Philips digital interface (S/PDIF) 64 connected to the digital tuner interface 62 is used for receiving the video/audio signal 61 and for outputting a first video/audio signal 63. The transceiver 66 connected to the Sony/Philips digital interface 64 is used for transforming the first video/audio signal 63 into the first digital signal 23. In the embodiment, the video/audio signal 61 is a digital signal.

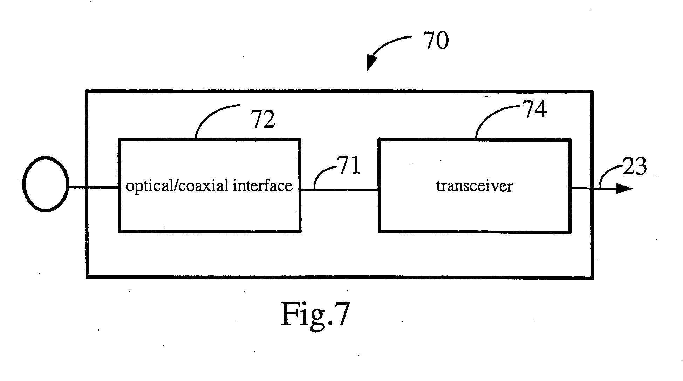

As shown in Fig. 7, in the embodiment, the digital signal generator 70 comprises an optical/coaxial interface 72 and a transceiver 74. The optical/coaxial interface 72 is used for receiving a video/audio signal 71. The transceiver 74 connected to the optical/coaxial interface 72 is used for transforming the video/audio signal 71 into the first digital signal 23.

The audio reproducing apparatus of the invention simulates the effect of five speakers' surround sound by utilizing two speakers. The Dolby digital sound effect is simulated from two speakers in the television by using the Dolby virtual speaker technology, which processes the Dolby encoding audio signal by the digital signal processor. Using the audio reproducing apparatus of the invention in the application of digital appliances, such as in the design of the rear projection television, the plasma display panel TV, and the liquid crystal display TV, this invention saves the space occupied by the television. Furthermore, it saves the expensive cost of five speakers. In this way, the level of entertainment provided by digital appliances can be promoted, and this advanced technology provides a new type of hearing enjoyment to human.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. An audio reproducing apparatus in a video and audio system, the audio reproducing apparatus comprising:
a digital signal generator for generating a first digital signal;
a de-multiplexer connected to the digital signal generator for receiving the first digital signal to generate a selection signal;
a Dolby decoder connected to the de-multiplexer for receiving the selection signal, the Dolby decoder transforming the selection signal to a first processing signal and transforming the first processing signal to a second processing signal after a transformation operation;
a pulse width modulator connected to the Dolby decoder for receiving the second processing signal and for generating a modulated signal; and
an audio player connected to the pulse width modulator for receiving the modulated signal and for transforming the modulated signal to an audio signal.

2. The audio reproducing apparatus of claim 1, wherein the first processing signal of the Dolby decoder comprises six channel output signals.

3. The audio reproducing apparatus of claim 2, wherein the second processing signal of the Dolby decoder comprises a channel simulating signal.

4. The audio reproducing apparatus of claim 1, wherein the audio player comprises:
an amplifier for transforming the modulated signal into an amplified signal; and
a speaker set connected to the amplifier for receiving and transforming the amplified signal into the audio signal.

5. The audio reproducing apparatus of claim 4, wherein the speaker set comprises two speakers.

6. The audio reproducing apparatus of claim 1, wherein the digital signal generator comprises:
a video/audio interface for receiving a video/audio signal;
a switch connected to the video/audio interface for transforming the video/audio signal into a transformed signal; and
an A/D converter connected to the switch for transforming the transformed signal to the first digital signal.

7. The audio reproducing apparatus of claim 1, wherein the digital signal generator comprises:
a digital tuner interface for receiving a video/ audio signal; and
a A/D converter connected to the digital tuner interface for transforming the video/ audio signal to the first digital signal.

8. The audio reproducing apparatus of claim 7, wherein the video/audio signal is an analog signal.

9. The audio reproducing apparatus of claim 1, wherein the digital signal generator comprises:
a digital tuner interface for receiving a video/audio signal;
a Sony/Philips digital interface (S/PDIF) connected to the digital tuner interface for receiving the video/audio signal and for outputting a first video/audio signal; and
a transceiver connected to the Sony/Philips digital interface for transforming the first video/audio signal into the first digital signal.

10. The audio reproducing apparatus of claim 9, wherein the video/audio signal is a digital signal.

11. The audio reproducing apparatus of claim 1, wherein the digital signal generator comprises:
an optical/coaxial interface for receiving a video/audio signal; and
a transceiver connected to the optical/coaxial interface for transforming the video/audio signal into the first digital signal.

12. The audio reproducing apparatus of claim 1, wherein the audio reproducing apparatus is a rear projection television.
